# EUROPEAN PATENT APPLICATION

(11) **EP 3 910 091 A1**
(43) Date of publication of application: **17.11.2021**
(21) Application number: 19908943.4
(22) Date of filing: 08.01.2019
(51) Int. Cl.: C23C 18/20, C23C 18/30, C23C 18/16, B29C 71/02, C08J 7/12, B33Y 80/00

(54) **COATING METHOD FOR PREVENTING DEGASSING OF AEROSPACE PART MADE OF RESIN**

(71) Applicant: Imtechnology. Co., Ltd., Gyeonggi-do 13488 (KR)
(72) Inventor: RYU, Seung Kyun, Seoul 08596 (KR); BAEK, Sook Eun, Seoul 07979 (KR)
(74) Representative: Hoffmann Eitle
(86) International application number: PCT/KR2019/000290
(87) International publication number: WO 2020/145425

(57) **Abstract**

The present invention relates to a coating method for preventing outgassing from an aerospace component made of a resin. In the coating method for preventing outgassing from the aerospace component, first, a polymer including a resin is provided. After that, primary degassing in which the polymer is subjected to hot air drying to evaporate gas therefrom is performed. Next, the surface of the polymer after the primary degassing is subjected to a cold plasma treatment to introduce hydrophilic functional groups so that it is possible to perform plating on the surface of the polymer. After that, the surface of the polymer after the cold plasma treatment is subjected to a catalystic treatment and an activation treatment for post-processes. Next, a first functional metal layer is formed on the surface of the polymer by means of electroless plating to suppress the release of gas through outgassing.

## Description

### [Technical Field]

The present invention relates to a coating method for preventing outgassing from an aerospace component made of a resin, and more particularly, to a coating method for preventing outgassing from an aerospace component made of a resin that is capable of suppressing the occurrence of the outgassing and water absorption and providing excellent durability and stability in space environments.

### [Background Art]

Generally, a polymer is composed of many different kinds of materials based on carbon compounds. A long chain structure with a unique molecular structure of a polymer is distinguished from that of metal and ceramic materials and has substantially various properties.

Further, the polymer is easily deformed by means of the addition of a material like a plasticizer.

The polymer is consistently evolved through the development of its performance and applications, and the polymer providing the possibility of an almost infinite range is used as materials for a printed circuit board, a temperature adjustable blanket, a lubricant, a coating material, an electric insulating material, a paint, and a high stiffness composite component.

The polymer is composed of organic molecules synthesized into a long chain. The high molecular weight and molecular bonds of the polymer produce inherent characteristics. The inherent characteristics of the polymer include toughness, elasticity, low density, high melting point and low melting point, molding capability, electrical resistance, and so on. Like this, the polymer has very different usability so that it can be used over a large range including spaceship applications. For example, the polymer can be applied to a thermal blanket, a thermal control paint, an adhesive, a lubricant, a printed circuit board, and an insulating coating.

In addition to the above-mentioned various and useful characteristics of the polymer, however, many requirements have to be satisfied so as to allow the polymer to be used in the spaceship applications.

For example, the spaceship applications need requirements, such as capability functioning in a vacuum, very low outgassing characteristics for preventing neighboring components from being polluted, resistance to extremely rough ultraviolet rays, resistance to charged particle radiation on orbit, resistance to erosion caused by atomic oxygen, durability to extreme air temperatures, and survival capability in a task.

All of the requirements do not have to be satisfied at a time, but in the case of the polymer exposed directly to the surface of the spaceship, many of the requirements have to be satisfied.

However, it is very hard that the requirements are satisfied only through the polymer. The problem can be substantially solved by forming an appropriate metal layer on the surface of the polymer used in outer space. However, it is technically difficult to coat a metal on super engineering plastic and composite materials available in extreme environments, thereby failing to satisfy the requirements.

### [Disclosure]

### [Technical Problem]

Accordingly, the present invention has been made to solve the above-mentioned problems, and it is an object of the present invention to provide a coating method for preventing outgassing from an aerospace component made of a resin that is capable of achieving low gas releasing (outgassing) characteristics, suppression of water absorption, and excellent durability and stability in extreme space environments including ultraviolet rays, atomic oxygen, and so on.

The technical problems to be achieved through the present invention are not limited as mentioned above, and other technical problems not mentioned herein will be obviously understood by one of ordinary skill in the art through the following description.

### [Technical Solution]

To accomplish the above-mentioned objects, according to the present invention, there is provided a coating method for preventing outgassing from a resin material aerospace component, the coating method including the steps of: providing a polymer including the resin; performing primary degassing in which the polymer is subjected to hot air drying to evaporate gas therefrom; allowing the surface of the polymer after the primary degassing to be subjected to a
cold plasma treatment to introduce hydrophilic functional groups so that it is possible to perform plating on the surface of the polymer; allowing the surface of the polymer after the cold plasma treatment to be subjected to a catalystic treatment and an activation treatment for post-processes; and forming a first functional metal layer on the surface of the polymer by means of electroless plating to suppress the release of gas through outgassing.

According to the present invention, the coating method further includes, after the step of forming the first functional metal layer, the step of performing secondary degassing in which the polymer is heated to a temperature less than a softening point thereof for 5 to 200 minutes to remove gas therefrom.

According to the present invention, the coating method further includes the step of forming a second functional metal layer on top of the first functional metal layer by means of wet plating to protect the polymer from extreme space environments including atomic oxygen, charged particles, and ultraviolet rays.

According to the present invention, through the secondary degassing, an adhesive force between the polymer and the first functional metal layer is improved.

According to the present invention, the coating method further includes, after the step of forming the first functional metal layer and before the step of forming the second functional metal layer, the step of performing secondary degassing in which the polymer is heated to a temperature less than a softening point thereof for 5 to 200 minutes to remove gas there from, the first functional metal layer being formed on the entire area except for a portion of the surface of the polymer in the step of forming the first functional metal layer so as to easily release the gas in the secondary degassing, and the portion of the surface of the polymer being coated with the second functional metal layer.

According to the present invention, the step of providing the polymer including the resin includes a process of manufacturing a high-frequency waveguide through 3D printing or machining of the polymer, so that in the step of forming the first functional metal layer, a conductive metal is coated on the inner and outer surfaces of the waveguide made of the polymer to form the first functional metal layer thereon, at least one of gold, silver and copper is coated on top of the first functional metal layer formed on the inner surface of the waveguide to form the second functional metal layer, and at least one of nickel, chrome, and an alloy thereof is coated on top of the first functional metal layer formed on the outer surface of the waveguide to form a third functional metal layer.

According to the present invention, the step of providing the polymer including the resin includes a process of manufacturing a wiring structure with electric wires built therein through 3D printing, and the first functional metal layer is coated on the surface of the wiring structure.

### [Advantageous Effects]

According to the present invention, the coating method for preventing outgassing from an aerospace component made of a resin is carried out to allow the surface of the polymer like the resin to be coated with functional metal layers, thereby achieving low gas releasing (outgassing) characteristics, suppression of water absorption, and excellent durability and stability in extreme space environments like ultraviolet rays or atomic oxygen.

The effects of the invention are not limited as mentioned above, and it should be understood that the effects of the invention include all effects inferable from the detailed description and claims of the present invention.

### [Brief Description of Drawings]

FIGS. 1 to 4 are photographs showing aerospace components with a polymer coated with functional metal layers through a coating method for preventing outgassing from an aerospace component according to an embodiment of the present invention.
FIG.5 is a flowchart showing a method for manufacturing an aerospace component with a polymer coated with functional metal layers through the coating method for preventing outgassing from the aerospace component according to the embodiment of the present invention.
FIG. 6 is photographs showing solid frames with a polymer coated with functional metal layers through the coating method for preventing outgassing from the aerospace component according to the embodiment of the present invention.
FIGS.7 to 8 are showing examples of the method for manufacturing the aerospace component with the polymer coated with functional metal layers through the coating method for preventing outgassing from the aerospace component according to the embodiment of the present invention.
FIG. 9 show processes for manufacturing an aerospace component with a polymer coated with functional metal layers through a coating method for preventing outgassing from the aerospace component according to another embodiment of the present invention.
FIG.10 show processes for manufacturing an aerospace component with a polymer coated with functional metal layers through a coating method for preventing outgassing from the aerospace component according to yet another embodiment of the present invention.

### [Best Mode for Invention]

Hereinafter, the present invention will now be described in detail with reference to the attached drawings. Before the present invention is disclosed and described, the disclosed embodiments are merely exemplary of the invention, and the present invention is not limited thereto. The corresponding parts in the drawings are indicated by corresponding reference numerals.

In the description, when it is said that one element is described as being "connected" or "coupled" to the other element, one element may be directly connected or coupled to the other element, but it should be understood that another element may be present between the two elements. When it is said that one portion is described as "includes" any component, further, one element further may include other components unless no specific description is suggested.

Terms used in this application are used to only describe specific exemplary embodiments and are not intended to restrict the present invention. An expression referencing a singular value additionally refers to a corresponding expression of the plural number, unless explicitly limited otherwise by the context. In this application, terms, such as "comprise", "include", or 'have", are intended to designate those characteristics, numbers, steps, operations, elements, or parts which are described in the specification, or any combination of them that exist, and it should be understood that they do not preclude the possibility of the existence or possible addition of one or more additional characteristics, numbers, steps, operations, elements, or parts, or combinations thereof.

Now, an explanation on the present invention will now be given in detail with reference to the attached drawings.

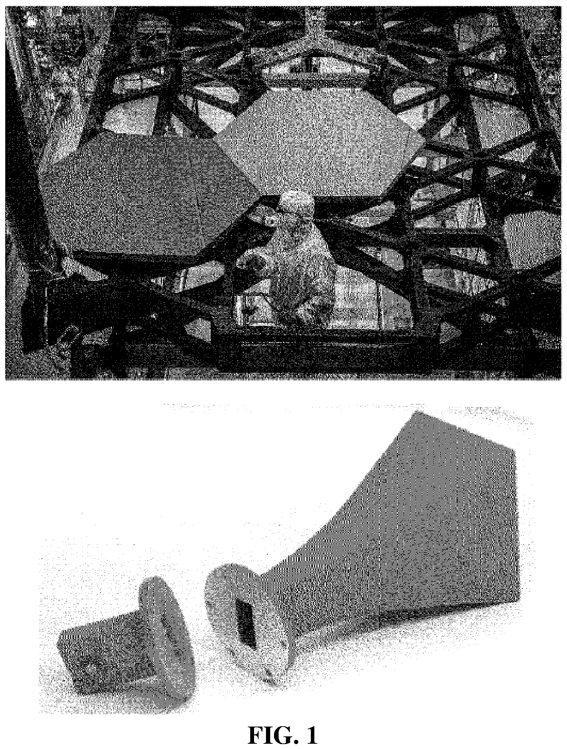

FIGS.1a to 4b are photographs showing aerospace components with a polymer coated with functional metal layers through a coating method for preventing outgassing from the aerospace components according to an embodiment of the present invention.

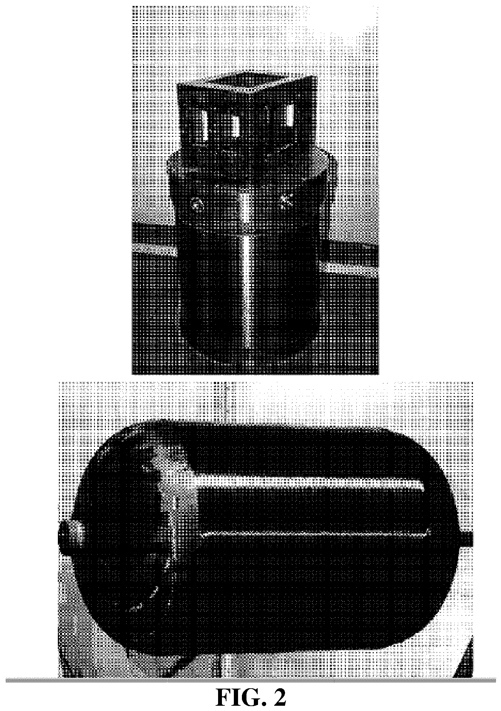

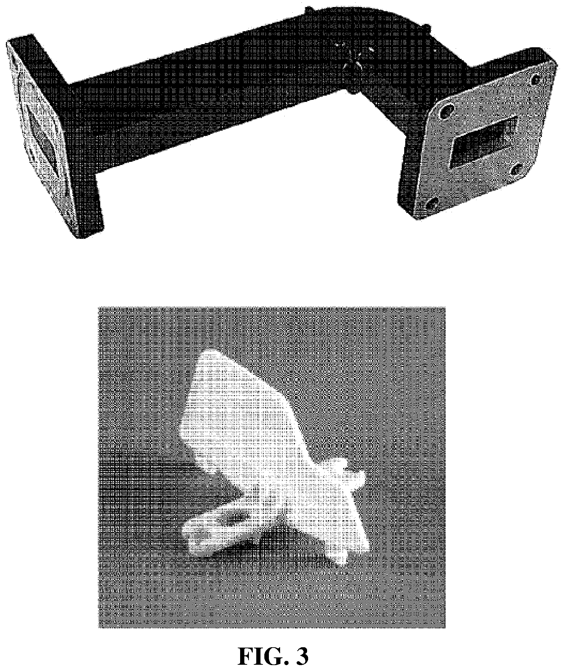

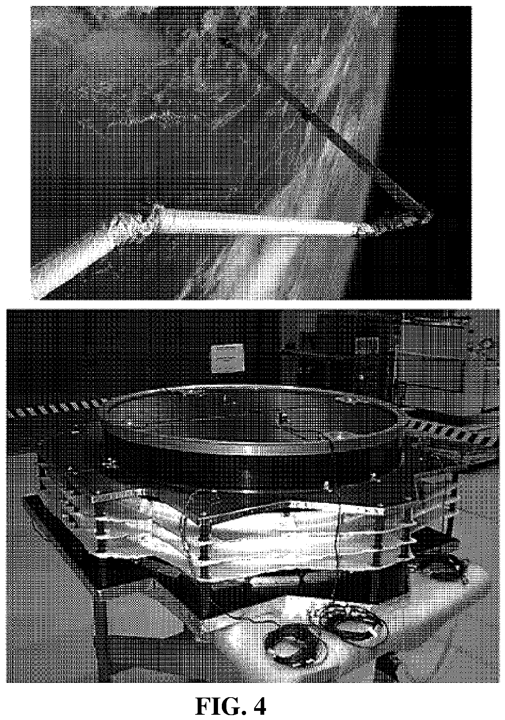

Referring to FIGS.1a to 4b, aerospace components with a polymer coated with functional metal layers are members applied to spaceships, artificial satellites, aircraft, and so on, and for example, they can be applied to bodies and windows of spaceships, bodies and outer covers of artificial satellites, high sensitivity sensor housings, supports or housings of reflection mirrors, antennas (See FIGS.1a and 1b), propellant tanks of the satellite (See FIGS.2a and 2b), waveguides, frame supports (See FIGS.3a and 3b), communication filters, electromagnetic shielding parts, robot arms, ship protection bumpers (See FIGS.4a and 4b), and so on.

Each aerospace component with a polymer coated with functional metal layers (herein after, referred to as 'aerospace component') includes the polymer including a polymer and the functional metal layers for coating the polymer. According to the present invention, the metal layer is applied to the surface of the polymer by means of plating.

As mentioned above, the polymer has many different characteristics, such as toughness, elasticity, low density, high melting point and low melting point, molding capability, electrical resistance, and so on. Contrarily, functionality, durability, and stability, which are required in extreme space environments, are not satisfied only through the polymer.

For example, capability functioning in a vacuum, very low outgassing characteristics for preventing neighboring components from being polluted, resistance to extremely rough ultraviolet rays, resistance to charged particle radiation on orbit, resistance to erosion caused by atomic oxygen, durability to extreme air temperatures, and survival capability in a task, which are required in the extreme space environments, cannot be satisfied sufficiently only through the polymer.

In specific, bumpers for protecting a body of the spaceship from collision against various objects like space waste are located in different positions of the spaceship to protect the spaceship. There are various kinds of spaceship body bumpers, and they are installed at given intervals to enhance their performance. Generally, a high strength material like Kevlar or aluminum oxide fiber is used between hard layers of the protection bumpers. So as to produce a shield with a minimum mass, a type, material, thickness, and an inter-layer distance of the shield are freely selected to minimize the possibility of intrusion. More than 100 shielding bumpers are used in an International Space Station (ISS), and a larger number of shielding bumpers are installed on important sections. Accordingly, a carbon fiber reinforced plastic (CFRP) composite bumper having a multiple structure in which a weight is light and metal layers with high strength are formed on a surface thereof is very useful to protect the body from various pieces floating in outer space.

According to the present invention, the aerospace component has the advantages of the polymer and the advantages of the metals in the metal layers coated on the polymer, so that the characteristics of the composite material can satisfy the functionality, durability, and stability that are required in the space environments.

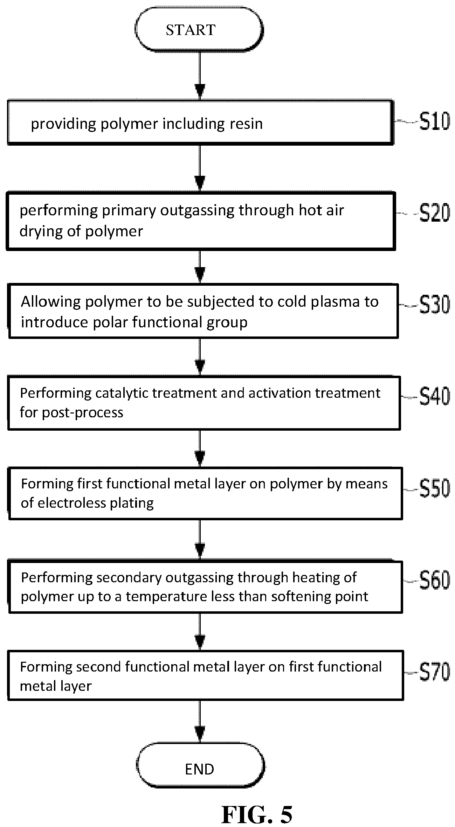

FIG.5 is a flowchart showing a method for manufacturing an aerospace component with a polymer coated with functional metal layers through the coating method for preventing outgassing from the aerospace components according to the embodiment of the present invention.

In the coating method for preventing outgassing from the aerospace component according to the present invention, first, a polymer including resin is provided (at step S10). After that, primary degassing in which the polymer is subjected to hot air drying to evaporate gas therefrom is carried out (at step S20).

Next, the surface of the polymer is subjected to a cold plasma treatment to introduce hydrophilic functional groups so that it is possible to perform plating on the surface of the polymer (at step S30).

Subsequently, the surface of the polymer is subjected to a catalystic treatment and an activation treatment for post-processes (at step S40). After that, a first functional metal layer is formed on the surface of the polymer by means of electroless plating to suppress outgassing from the surface of the polymer (at step S50).

After the first functional metal layer has been formed, secondary outgassing in which the polymer is heated to a temperature less than a softening point thereof for 5 to 200 minutes to remove gas therefrom is carried out (at step S60). Through the secondary degassing, an adhesive force between the polymer and the first functional metal layer is improved.

Further, a second functional metal layer is formed on top of the first functional metal layer by means of wet plating to protect the polymer from extreme space environments including atomic oxygen, charged particles, and ultraviolet rays (at step S70).

If it is desired to form the second functional metal layer, the secondary degassing is carried out before the second functional metal layer is formed after the first functional metal layer has been formed.

In the step of forming the first functional metal layer is formed, in this case, so as to easily release the gas in the secondary degassing, the first functional metal layer is formed on the entire area except for a portion of the surface of the polymer. Also, the portion of the surface of the polymer is covered with the second functional metal layer through post processes.

Hereinafter, the respective steps will be in detail explained.

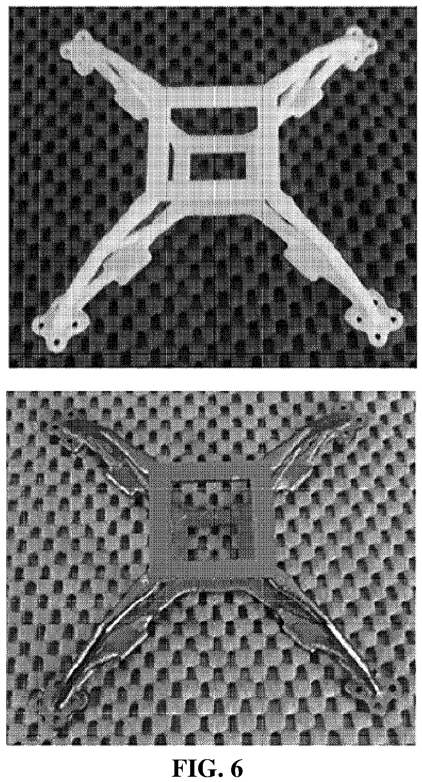

FIGS.6a and 6b are photographs showing solid frames with a polymer coated with functional metal layers through a coating method for preventing outgassing from the aerospace component according to the embodiment of the present invention.

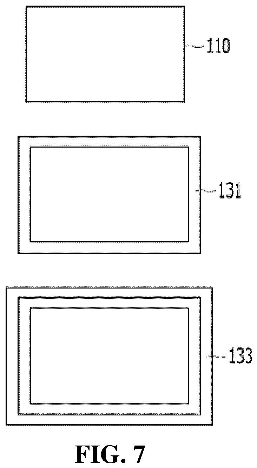

FIGS.7a to 8c are showing examples of the method for manufacturing the aerospace component with the polymer coated with functional metal layers through the coating method for preventing outgassing from the aerospace components according to the embodiment of the present invention.

In the coating method for preventing outgassing from the aerospace component according to the present invention, first, the polymer 110 including a resin or polymer is provided (at the step S10). The polymer 100 is one of the polymers of the above-mentioned aerospace components. Otherwise, the polymer 110 may be a three-dimensional frame as shown in FIG.6a.

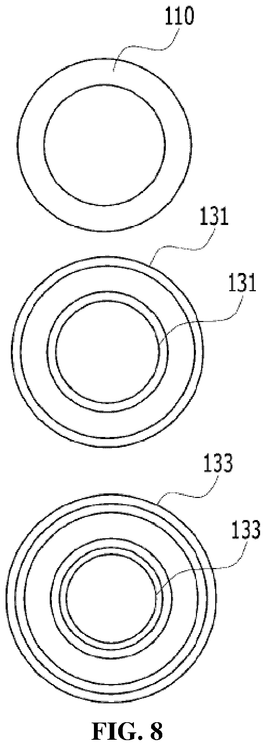

In this case, the polymer 110 has the shape of a block or bar as shown in FIG.7a or has the shape of a hollow pipe as shown in FIG.8a.

For example, the polymer 110 is made by means of injection molding. Otherwise, the polymer 110 is made of nylon resin particles to the shape of the solid frame as shown in FIGS.6a and 6b by means of an SLS (Selective Laser Sintering) 3D printer. Hereinafter, an explanation of the solid frame as shown in FIGS.6a and 6b will be given.

So as to provide the polymer 110, of course, additional machining processes may be carried out.

Next, check-up and cleaning are carried out. For example, after defects on the outer shape of the solid frame are checked, contaminants like a fingerprint, dust, organic matters, and so on are checked with the naked eye, and ultrasonic cleaning is carried out through an ultrasonic cleaner.

After that, baking or hot air drying as the primary degassing is carried out (at the step S20). For example, the cleaning agent is removed from the surface of the polymer 110 (for example, the solid frame) in an oven by means of hot air, and the water absorbed to the surface of the polymer 110 during the cleaning process is removed, thereby preventing a pressure in the post processes from being decreased due to existence of water and gas and reducing an amount of outgassing when the aerospace component according to the present invention is used for the body of the spaceship.

For example, a strong vacuum in outer space causes outgassing from the polymer 110, so that volatile materials are emitted from the polymer 110. The emitted gas molecules are deposited on the surface of the spaceship and are more collected on a cold surface. In specific, such molecular contamination influences sensitive optical characteristics of the body of the spaceship and the surface of the component mounted on the body.

So as to solve such problems, agencies like NASA regulate space station outside contamination control requirements, limitations in molecular deposition, induced molecular heat density, and fine particle emission. The NASA requires material identification, position, vacuum exposure surface area, operating temperature range, and condensable gas releasing amount data, and so on, and materials known as materials releasing gas have to be heated and vacuum-baked at a temperature higher than an expected temperature on an orbit for at least 24 hours. Contrarily, if it is not known whether materials release gas, they have to be heated to a temperature of 100°C, and component assemblies can be heated and vacuum-baked before flying.

So as to solve such problems, according to the present invention, the primary outgassing and the secondary outgassing are carried out when the aerospace component is made, thereby reducing the amount of outgassing from the aerospace component, and further, a metal is plated on the surface of the polymer 110 to suppress the occurrence of the outgassing, thereby suggesting the method for manufacturing the aerospace component from which the outgassing is remarkably reduced.

After the primary outgassing has been carried out, next, the surface of the polymer 110 is subjected to the cold plasma treatment to introduce the polar functional groups (at the step S30).

For example, after the polymer 110 is put into a vacuum chamber, hydrophilic functional groups are introduced into the surface of the polymer 110 by means of the cold plasma treatment, so that the polymer 110 is changed to a structure in which plating is possible.

Through the cold plasma treatment, a contacting angle of the surface of the polymer 110 with respect to H2O becomes substantially small, and desirably, the contacting angle is kept in the range of 10-50°, so that the metal plating effectiveness in the metal plating process as the post process can be improved.

Even if the polymer 110 is treated with ion beam like hydrogen in reactive gas like oxygen, the polar functional groups can be produced on the surface of the polymer 110, but as the treatment has to be controlled under a high vacuum, a treatment cost is undesirably expensive.

Accordingly, if the cold plasma treatment that is controlled under a low vacuum of about 10 Torr is applied, the polar functional groups can be produced on the surface of the polymer 110 with a substantially low treatment cost.

If a material with oxygen like acetone or acetic acid for expressing polar groups is activated by plasma and then reacts to the polymer like PE or PP, the polar functional groups like C=O or O-H are produced on the surface of the polymer. The production of the polar functional groups can be checked by measuring the contact angle of the surface of the polymer 110 with respect to H2O or by detecting hydroxyl groups or carbonyl groups through an infrared absorption spectroscope. Further, the treatment time and control conditions of a plasma generating device are controlled to adjust degrees of functional groups generated according to the kind of metal to be plated or a required film thickness.

The polymers commonly referred to as plastics have differences according to elements of monomers, but generally, the polymers are strong hydrophobic materials. All of PEEK, PPS, polycarbonate (PC), Teflon (PTFE), epoxy resin, and so on, which are widely used in mechanical parts in the aerospace industry, are hydrophobic.

The polymer does not transmit electricity and is very stable so that it cannot be easily oxidized and reduced, and through electroplating or general electroless plating as a chemical reduction method, accordingly, it is impossible to form a metal film on the surface of the polymer 110. However, if the functional groups capable of accumulating metal ions on the surface of the polymer are large, it is possible to form the metal film on the surface of the polymer 110 through the electroless plating using a reducing agent.

For example, in the plasma treatment for treating the surface of the polymer 110 to form a first functional metal layer 131 as will be discussed later on the surface of the polymer 110, a temperature of the polymer 110 to be treated by means of cold plasma is less than a glass transition point Tg, and desirably, in a state where a temperature in the vacuum vessel is less than 50°C, the plasma treatment is carried out.

Further, desirably, one or more elements selected from the group consisting of low density air, acetone, water, acetaldehyde, formalin, acrylic acid, oxygen, nitrogen, argon, and hydrogen are mixed to generate the plasma.

In the application of the electroless plating after the cold plasma treatment according to the present invention, the polymer 110 to which the electroless plating is applied makes use of PEEK, PPS (polyphenylene sulfide), PTFE (polytetrafluoroethylene), PI (polyimide), epoxy resin, or a mixture by mixing the PEEK, PPS, PTFE, PI, or epoxy resin and organic or nonorganic matters like carbon fibers, glass fibers, alumina, and so on, and a noble metal catalyst is desirably palladium.

As mentioned above, in the plating method according to the present invention, the hydrophilic functional groups are generated on the surface of the polymer 110 by means of the cold plasma containing reactive gas or by means of the ion implantation, and next, the noble metal catalyst is absorbed to the surface of the polarized polymer 110. In a state where the metal ions to be plated are condensed, the metal is precipitated by means of the reducing agent, without transmitting electricity, to make the metal film.

After the cold plasma treatment, next, the catalyst process and the activation process are carried out (at the step S40). For example, the polymer 110 after the plasma treatment is submerged into a mixed liquid made by mixing a catalyst-imparting liquid (e.g., 0.1 ∼ 100 g/l of palladium chloride (PdCl2)) and 0.1 ∼ 100 g/f of tin (II) chloride (SnCI2) for five minutes. After that, the activation process is carried out. For example, the polymer 110 after the catalyst process is subjected to the activation process in 50∼60% hydrochloric acid solution at a temperature of 15∼50°C for three minutes and is subjected to washing three times.

In the electroless plating, after that, heating is carried out to activate the reducing agent, but since it is hard to heat the polymer, as mentioned above, the catalyst can be used. The palladium ions are easily reduced to a metal state by means of the reducing agent to advantageously provide activated hydrogen required for the reduction of a thin film type material like copper. Tin (Sn) added to expose the palladium ions well is cleaned with weak acidic liquid (the hydrochloric acid solution as mentioned above) and is thus removed.

More desirably, the hydrophilic functional groups are introduced onto the surface of the polymer 110 by means of the cold plasma treatment, and after the polymer 110 is submerged into the catalyst, it is cleaned with the hydrochloric acid. After that, further, the polymer 110 is cleaned by means of a cleaning agent or an ultrasonic cleaner. Through the addition of the cleaning, the hydrophilic functional groups introduced onto the surface of the polymer 110 can be arranged, and accordingly, the metal film plating effectiveness in the post process can be more improved.

Subsequently, the first functional metal layer 131 is formed by means of the electroless plating (at the step S50).

In the case of copper plating, for example, the polymer 110 after the activation process is submerged into an electroless copper plating liquid in which copper sulfate, formalin, caustic soda, EDTA, sodium bicarbonate, and so on are mixed for 60 minutes to perform the plating, and next, the plated polymer 110 is washed three times to form the first functional metal layer 131 made of the copper on the surface thereof.

Otherwise, after the polymer 110 is submerged into an aqueous solution containing 20∼150 ml/l sulfuric acid or hydrochloric acid at a temperature of 15∼40°C for 1 to 15 minutes, the electroless plating is then carried out.

As shown in FIG.7b, the first functional metal layer 131 is coated only on the outer surface of the polymer 110, and further, as shown in FIG.8b, the first functional metal layers 131 are coated on the inner and outer peripheral surfaces of the pipe-shaped polymer 110.

The plated first functional metal layer 131 is formed of a film selected from a copper film, a nickel film, a chrome film, a noble metal film containing gold or silver, an alloy film thereof, and a composite material film thereof.

The first functional metal layer 131 is formed by means of the copper plating as mentioned above or by means of plating with a metal like silver or gold with high electrical conductivity. The first functional metal layer 131 has more excellent characteristics of electromagnetic shielding than a light metal like aluminum.

In the case of the aerospace component according to the present invention, further, the metal is coated to a thickness higher than 4 µm onto the surface of the polymer 110 to form the first functional metal layer 131, so that an amount of gas released in the vacuum state is reduced remarkably, for example, to about 1/100 when compared to the polymer 110 with no plating treatment.

Accordingly, the aerospace component including the polymer 110 coated with the functional metal layer according to the present invention is applicable to windows, antennas, waveguides, communication filters, and housings of spaceships and satellites, electromagnetic shielding parts of the bodies of the spaceships, and supports of optical systems like sensors and lenses of the satellites.

According to the present invention, after the first functional metal layer 131 has been formed, the secondary degassing is carried out (at the step S60).

For example, the polymer 110 is heated to a temperature less than a softening point thereof for 5 to 200 minutes. Through the secondary degassing, gas is released from the polymer 110, so that outgassing from the aerospace component can be more reduced at a time when the aerospace component is used in the spaceship in the future.

In the process where the first functional metal layer 131 is formed, on the other hand, so as to allow the outgassing to be easy in the secondary degassing, the first functional metal layer 131 is plated on the surface of the polymer 110 in such a manner as not to allow a portion of the surface of the polymer 110 to be coated with the first functional metal layer 131. Through the secondary degassing, also, an adhesive force between the polymer 110 and the first functional metal layer 131 is improved.

Furthermore, the aerospace component according to the present invention has an excellent performance in water absorption and impact resistance as other main considerations for the selection of the aerospace component.

Light damages due to impacts can reduce the compression strength of a general epoxy composite material to more than 50%, and the water absorption is disadvantageous in terms of dimension stability (water expansion coefficient) and volume of gas released.

The aerospace component including the polymer 110 coated with the functional metal layer according to the present invention can improve the mechanical performance and reduce the mass of the spaceship. That is, the aerospace component can provide higher strength when compared to the weight. Accordingly, the aerospace component can be very strong to external impacts when compared to the weight.

Also, as mentioned above, when the aerospace component is applied to a real spaceship body, the amount of outgassing is remarkably reduced through the removal of the gas in the degassing processes and the gas releasing prevention effectiveness of the functional metal film (for example, the first functional metal layer) in the manufacturing process of the aerospace component, thereby satisfying the requirements in the space environments.

Accordingly, the aerospace component including the polymer 110 coated with the functional metal layer according to the present invention can become a replacement of a composite material based on aluminum, titanium, steel, and graphite fibers in the spaceship having required mass and stability requirements.

On the other hand, the properties of a material are greatly influenced by the kinds and properties of metal plated to the outermost surface of the material, and accordingly, metals having different properties, alloys containing the metals, or metal composite materials can be formed according to purposes. That is, only the first functional metal layer 131 is used to provide necessary functions, and otherwise, secondary and tertiary plating is carried out to provide additional functions. In the post-plating like the secondary and tertiary plating, a wet electric plating solution is used to allow a metal layer adequate to the use purpose to be formed on the outermost surface of the polymer 110.

For example, as shown in FIGS.7c and 8c, a second functional metal layer 133 is formed additionally on top of the first functional metal layer 131 (at the step S70). For example, the material on which the first functional metal layer 131 is formed is connected to a negative pole and is then submerged into a nickel alloy plating solution, and in this state, an electric current flows to the material for 30 minutes to form a nickel alloy film (the second functional metal layer 133) on the surface of the first functional metal layer 131 (electroless copper layer). Next, the washing for the material is carried out three times.

The second functional metal layer 133 has various functions.

For example, atomic oxygen (AO) is produced when short wavelength UV radiation reacts with molecular oxygen in the upper atmosphere and is known as the most important element in material decomposition in space environments. The atomic oxygen can oxidize many metals, particularly silver, copper and osmium. The atomic oxygen strongly reacts with all materials including carbon, nitrogen, sulfur and hydrogen bonds. This means that many polymers react with atomic oxygen and are thus corroded.

A high density and high corrosion-resistant metal like nickel or chrome is plated on the outer most surface layer of the aerospace component according to the present invention, thereby suppressing the reactivity with the atomic oxygen to a level of 1/1000 lower than that in the polymer 110 with no metal layer coated thereon. Accordingly, the polymer 110 for the aerospace component can be applied to the bodies or external covers of the spaceships and satellites.

Of course, it is possible that the second functional metal layer 133 may be coated on the surface of the polymer 110, without having any first functional metal layer 131.

After the second functional metal layer 133 has been formed, drying is carried out. For example, the material on which the second functional metal layer 133 is formed is washed by means of steam with a temperature of 65°C and is then dried in a drying furnace at a temperature of 60°C.

The plated material made by the above-mentioned processes, for example, the solid frame as shown in FIG.6b includes the first functional metal layer 131 as the dense copper layer with a thickness greater than 8 µm and the second functional metal layer 133 as a thin film formed on the surface of the first functional metal layer 131.

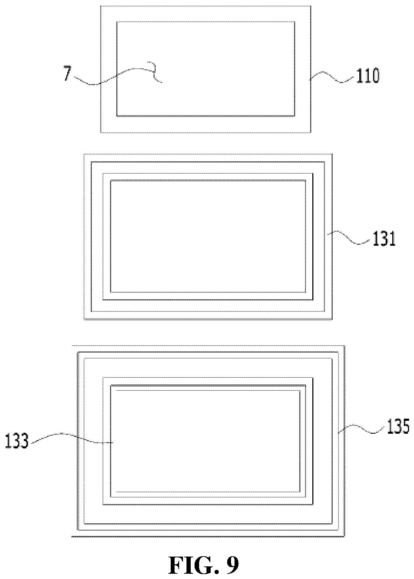

FIGS.9a to 9c show processes for manufacturing an aerospace component with a polymer coated with functional metal layers through a coating method for preventing outgassing from the aerospace component according to another embodiment of the present invention.

In specific, FIGS.9a to 9c show the processes for making the polymer as a high-frequency component like a waveguide through a 3D printer and forming the functional metal layers on the surface of the polymer. For example, a waveguide 110 with a hollow space 7 formed at the inside thereof is made by means of the 3D printer, and through the plating as shown in FIGS.1 to 8c, a conductive metal layer 131 as a first functional metal layer is formed.

So as to improve the performance and reliability of the waveguide 110, a high conductive metal layer 133 using silver (Ag) or copper (Cu) as a second functional metal layer is formed on top of the conductive metal layer 131 at the internal surface of the waveguide 110, and a high strength metal layer 135 using nickel or chrome alloy as a third functional metal layer is formed on top of the conductive metal layer 131 at the external surface of the waveguide 110. The order of the high conductive metal layer 133 and the high strength metal layer 135 may be changed with each other if necessary.

The waveguide with such a structure is easily made by means of the 3D printer, has excellent characteristics of electrical signals by means of the metal layers, is lightweight, and provides high strength.

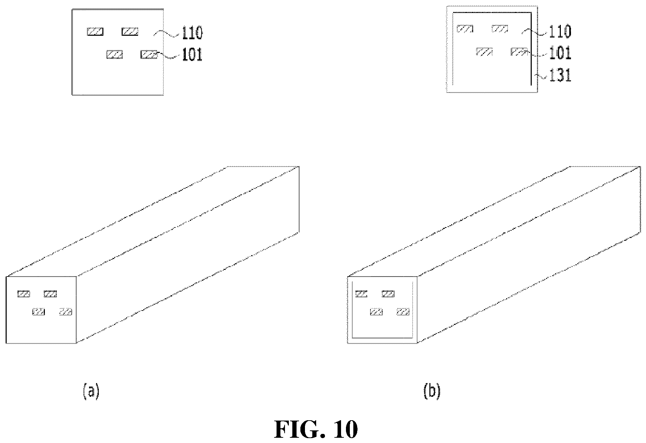

FIGS.10a and 10b show processes for manufacturing an aerospace component with a polymer coated with functional metal layers through a coating method for preventing outgassing from the aerospace component according to yet another embodiment of the present invention.

According to the present invention, FIGS.10a and 10b show a wiring structure made of a polymer by means of a 3D printer, for example, show processes for manufacturing a wiring structure located inside the spaceship body.

As shown in FIG.10a, the wiring structure in which electrical wires 101 are covered with a polymer 110 like plastic or they are buried in the polymer 110 is made by means of 3D printing or injection. Next, as shown in FIG.10b, through the plating as shown in FIGS.1 to 8c, a functional metal layer 131 is formed on the surface of the polymer 110 through the plating as shown in FIGS.1 to 8c.

When a high-speed air vehicle like a spaceship or missile is launched, a force 3 times larger than its weight is applied to the air vehicle. The force causes trouble in circuit wiring to thus have a bad influence on the stability of the air vehicle. Like the present invention, if the high-strength metal layer 131 (functional metal layer) is formed on the outer surface of the wiring structure in which the circuit wires (electrical wires) are built, the strength is greatly improved to prevent the structure from being deformed when the air vehicle is launched or moves at a high speed, thereby obtaining the improvement in the stability of the air vehicle.

Further, the functional metal layer 131 protects the circuit wires from outside noise signals or electrical shocks, thereby greatly improving the performance of the circuit wires.

In addition to the atomic oxygen, as examples of extreme space environments, on the other hand, there are ultraviolet emission, fine particle or ionizing radiation, plasma, extreme temperatures, and thermal cycling.

Referring to the ultraviolet emission, the atomic oxygen causes whitening of material, but ultraviolet rays generally cause contamination of material so that the material becomes darkened and colored. Also, the ultraviolet rays cause polymers to be damaged by means of cross-linking (curing) or chain scission (weakening).

According to the present invention, the aerospace component is configured to have the polymer 110 plated with the functional metal layer, thereby drastically suppressing the damage caused by the ultraviolet rays to a level of about 1/1000 lower than that in the polymer 110 with no plating. Accordingly, the polymer 110 for the aerospace component can be applied to the bodies or external covers of the spaceships and satellites.

On the other hand, three main sources of charged particle radiation occurring naturally in outer space are galactic cosmic rays, solar proton events, and Van Allen radiation belts.

According to polymers (high molecular devices), the fine particle radiation causes cross-linking or chain scission, which is similar to the damage of the polymers due to the ultraviolet rays, thereby causing polymer brittleness.

According to the present invention, the high density and high hardness metal like nickel or chrome is plated on the outermost surface layer (for example, the second functional metal layer 133) of the aerospace component, thereby suppressing the damage caused by the fine particle and ionizing radiation to a level of about 1/1000 lower than that in the polymer 110 with no plating.

There is space plasma separately from high-energy fine particle radiation. A surrounding plasma environment is composed of oxygen ions (O+) charged almost positively and free electrons, which is different according to solar activities and altitudes. The space plasma causes ion sputtering, arcing, parasitic current, and even pollution increment.

Further, there are extreme temperature problems and thermal cycling problems the International Space Station (ISS) have had, and as the spaceship moves very fast, also, the spaceship may collide against fine space pieces. The fine space pieces make craters with diameters smaller than 0.5 mm. Also, micro particles or space pieces cause material differentiation, coating peeling, or short-circuit of solar cells.

According to the present invention, the high-corrosion metal like alloy containing tungsten or chrome is plated on the outermost surface layer (for example, the second functional metal layer 133) of the aerospace component, thereby remarkably suppressing the damage caused by the space plasma to a level of about 1/1000 lower than that in the polymer 110 with no plating. Further, the polymer 110 is protected by means of the functional metal layer having high deformability and excellent functions and durability even at the extreme temperature, thereby solving the extreme temperature problem and the thermal cycling problem.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention. The foregoing description of the embodiments of the invention has been presented for the purpose of illustration; it is not intended to be exhaustive or to limit the invention to the precise forms disclosed. For example, the parts expressed in a singular form may be dispersedly provided, and in the same manner as above, the parts dispersed may be combined with each other.

It is therefore intended that the scope of the invention be limited not by this detailed description, but rather by the claims appended hereto, and it should be understood that the invention covers all the modifications, equivalents, and replacements within the idea and technical scope of the invention.

### [Mode for Invention]

Herein after, the embodiments of the present invention have been suggested in the best mode of the present invention.

## Claims

1. A coating method for preventing outgassing from an aerospace component made of a resin, the coating method comprising the steps of:
providing a polymer including the resin;
performing primary degassing in which the polymer is subjected to hot air drying to evaporate gas therefrom;
allowing the surface of the polymer after the primary degassing to be subjected to a cold plasma treatment to introduce hydrophilic functional groups so that it is possible to perform plating on the surface of the polymer;
allowing the surface of the polymer after the cold plasma treatment to be subjected to a catalystic treatment and an activation treatment for post-processes; and
forming a first functional metal layer on the surface of the polymer by means of electroless plating to suppress the release of gas through outgassing.

2. The coating method according to claim 1, further comprising, after the step of forming the first functional metal layer, the step of performing secondary degassing in which the polymer is heated to a temperature less than a softening point thereof for 5 to 200 minutes to remove gas therefrom.

3. The coating method according to claim 1, further comprising the step of forming a second functional metal layer on top of the first functional metal layer by means of wet plating to protect the polymer from extreme space environments including atomic oxygen, charged particles, and ultraviolet rays.

4. The coating method according to claim 2, wherein through the secondary outgassing, an adhesive force between the polymer and the first functional metal layer is improved.

5. The coating method according to claim 3, further comprising, after the step of forming the first functional metal layer and before the step of forming the second functional metal layer, the step of performing secondary degassing in which the polymer is heated to a temperature less than a softening point thereof for 5 to 200 minutes to remove gas therefrom, the first functional metal layer being formed on the entire area except for a portion of the surface of the polymer in the step of forming the first functional metal layer so as to easily release the gas in the secondary outgassing, and the portion of the surface of the polymer being coated with the second functional metal layer.

6. The coating method according to claim 1, wherein the step of providing the polymer including the resin comprises a process of manufacturing a high-frequency waveguide through 3D printing or machining of the polymer, so that in the step of forming the first functional metal layer, a conductive metal is coated on the inner and outer surfaces of the waveguide made of the polymer to form the first functional metal layer thereon, at least one of gold, silver and copper is coated on top of the first functional metal layer formed on the inner surface of the waveguide to form the second functional metal layer, and at least one of nickel, chrome, and an alloy thereof is coated on top of the first functional metal layer formed on the outer surface of the waveguide to form a third functional metal layer.

7. The coating method according to claim 1, wherein the step of providing the polymer including the resin comprises a process of manufacturing a wiring structure with electric wires built therein through 3D printing, and the first functional metal layer is coated on the surface of the wiring structure.
